# EUROPÄISCHE PATENTSCHRIFT

(11) **EP 0 890 772 B1**
(45) Veröffentlichungstag und Bekanntmachung des Hinweises auf die Patenterteilung: **17.09.2003**
(21) Anmeldenummer: 98112552.9
(22) Anmeldetag: 07.07.1998
(51) Int. Cl.: F16L 17/06, F16L 21/035, E04B 1/68, F16J 15/02, F16L 21/03, F16L 17/10, E03F 3/04, G01M 3/28

(54) **Dichtung mit Hohlräumen**
Sealing with cavities
Joint d'étancheité avec de cavités

(30) Priorität: 11.07.1997 DE 29712235 U
(43) Veröffentlichungstag der Anmeldung: 13.01.1999
(73) Patentinhaber: PT-Poly-Tec GmbH Vertrieb und Herstellung von Dichtungssystemen, 63150 Heusenstamm (DE)
(72) Erfinder:
(74) Vertreter: Blumbach, Kramer & Partner GbR

(56) Entgegenhaltungen:
- EP-A- 0 449 082
- EP-A- 0 543 103
- EP-A- 0 781 951
- WO-A-95/16872
- DE-A- 4 107 994
- DE-A- 4 236 368
- DE-A- 19 601 652
- DE-U- 9 017 653
- FR-A- 2 148 365
- FR-A- 2 200 522
- GB-A- 759 387
- US-A- 3 058 752
- US-A- 4 522 413
- US-A- 4 741 561
- US-A- 5 143 381

## Beschreibung

Die Erfindung bezieht sich auf eine Abdichtung von Fugen zwischen einem druckhöheren Raum und einem druckniedrigeren Raum an abzudichtenden Teilen und Baukörpern, insbesondere an Kanälen aus Betonrohren und Schachtbauwerken.

Bei einer bekannten Abdichtung (US-A-5 417 442) sind eine Primärdichtung in Form eines Keilgleitringes mit Schrägfläche als Einführungsabschnitt und eine Sekundärdichtung in Form eines axial vorstehenden Ringwulstes mit großer Nachgiebigkeit vorgesehen, der fachwerkartig untergliedert sein kann und mit Luft gefüllte Hohlräume ohne Auslaßöffnung aufweist. Der Keilgleitring als Primärdichtung sitzt auf der vorderen, zylinderförmigen Fläche des Spitzendes eines Rohres, während der Ringwulst als Sekundärdichtung an der radialen Vorderseite dieses Spitzendes angebracht ist. Beim Zusammenbau mit dem Muffenende eines Rohres gleitet die Muffe über die Schrägfläche des Keilgleitrings und preßt diesen zusammen, so daß ein Druckfeld mit ansteigender Druckflanke entsteht. Der Ringwulst als Sekundärdichtung wird beim Zusammenbau der Rohre mehr oder weniger zusammengepreßt, wobei die auftretenden Drücke gering sind, weil andernfalls die Rohre durch diesen Druck auseinandergeschoben werden. Demgemäß ist die Abdichtwirkung bei derartigen Ringwulstdichtungen nicht sehr groß, und man benötigt jedenfalls die Primärdichtung, um ein stärkeres Druckgefälle abzudichten. Bei Keilgleitringen als Primärdichtung hängt die Dichtwirkung von der Auflagebreite und dem Anpreßdruck ab, welche wiederum sehr stark von den Herstellungstoleranzen der ineinandergefügten Rohre abhängen, welche die Weite der abzudichtenden Fuge bestimmen. Ist die Fugenweite groß, dann werden Abdichtbreite und Anpreßdruck klein, während bei engem Spalt die Anpreßbreite und der Anpreßdruck zwar hoch werden, aber die Gefahr des Zerquetschens der Dichtung oder der Rißbildung in der Muffe oder dem Spitzende kann groß werden.

Aus der US-A-4 522 413 ist eine Abdichtung des Ausdehnungsspaltes zwischen Betonteilen bekannt, die unabhängig von der Spaltweite einen etwa gleichbleibenden Anpreßdruck garantieren sollen. Die Dichtung enthält sogenannte Chevron-Wände, die wegen ihrer knick-förmigen Gestaltung leicht in sich knicken. Eine Abdichtung zwischen einem Hochdruckraum und einem Niederdruckraum ist nicht möglich.

Dichtungen mit einem Hohlraum als Verpreßeinrichtung sind an sich bekannt (DE-A-38 15 142 und 42 36 368). Dabei wird ein im Dichtungskörper untergebrachter Hohlraum mit flüssigem, gegebenenfalls aushärtendem Verpreßmittel unter hohem Druck beschickt, wobei durch die Betonfertigteile geführte Röhrchen verwendet werden. Der Hohlraum läßt sich nicht als Prüfraum nutzen, um Dichtigkeit der Abdichtung nachzuweisen.

Es ist seit langem bekannt, Stoßfugendichtungen mit Hohlräumen auszustatten, die durch Innenhochdruck zu einer erhöhten Anpressung der Dichtung führen (DE-A-551 816).

Bei der US-A 4 299 399 werden unter anderem auch schlitzförmige Hohlräume vorgeschlagen, um dem Abdichtungsabschnitt eine Lamellenstruktur zu erteilen, die sich beim Steckmuffenzusammenbau parallelogrammartig verschiebt, um bei einem Zug auf die zusammengebaute Steckmuffe eine Sperrwirkung zu entfalten.

Die Anordnung von Gleitfahnen auf der Schrägfläche von Gleitdichtungen ist nicht mehr neu (US-A 4 299 399 und DE-A-36 01 757).

Bei einer Abdichtung mit den Merkmalen des Oberbegriffs des Anspruches 1 (EP 04 49 082 A2) ist ein Dichtkörper mit einem Einführungsabschnitt, einem vorderen Dichtringteil als Hauptdichtung, einem hinteren Dichtringteil als Vordichtung, und einem Muffenspiegelabdeckabschnitt vorgesehen. Der hintere Dichtringteil enthält einen mehrreihigen Aufbau von versetzt zueinander angeordneten Kanälen, so dass eine Gitterstruktur mit Y-artig verlaufenden Stegen gebildet wird, die als Druckstreben interpretiert werden können. Diese sind jedoch nicht in dem Hauptdichtungsabschnitt angeordnet, dessen freie Dichtfläche mit großem Druck an dem Spitzende anliegt, während die freien Flächen des hinteren Dichtringteils wegen der Nachgiebigkeit der Gitterstruktur mit nur geringem Druck an dem Spitzende anliegen. Die Hauptdichtungszone ist schmal, weswegen eine bestimmte Güte des Spitzendes des Rohres hinsichtlich Rundheit und Lunkerfreiheit zur Erzielung der Abdichtung vorausgesetzt wird. In der Praxis wird das hintere Dichtringteil als Manövrierraum für das Spitzende beim Zusammenstecken der Betonrohre verwendet.

Der Erfindung liegt die Aufgabe zugrunde, eine Abdichtung von Fugen zu schaffen, bei der die abzudichtenden Fugen keinen übermäßigen Toleranzanforderungen genügen müssen.

Die gestellte Aufgabe wird aufgrund der Merkmale des Anspruches 1 gelöst. Die abhängigen Ansprüche bilden Ausgestaltungen und Weiterentwicklungen der Erfindung.

Die Abdichtung von Fugen an abzudichtenden Teilen und Baukörpern soll so beschaffen sein, dass die Kontaktbreite und der Anpreßdruck der Dichtung wählbar sind. Ferner soll keine Relaxion nach Zusammenbau der Dichtung mit den abzudichtenden Bauteilen infolge Entweichens von Luft eintreten. Der Anpreßdruck der Dichtung soll gegebenenfalls infolge Innendruck proportional erhöht werden können.

Die Abdichtung soll ferner selbstschmierend und/oder selbsttätig nachabdichtend ausgebildet sein.

Die Abdichtung soll auch prüfbar und aktivierbar (nachabdichtbar) sein.

Bei der Erfindung ist ein Dichtungskörper vorgesehen, der vorzugsweise zueinander parallele Seiten aufweist, mit denen er in der Fuge der abzudichtenden Baukörper als Primärdichtung aufliegt. In dem Dichtungskörper sind Hohlräume so angebracht, daß sich eine Stützstruktur nach Art eines Fachwerks, jedoch mit verhältnismäßig dicken Streben ergibt, die nicht knicken, sondern breit gedrückt werden. Die Hohlräume zwischen den Streben sind nicht derart abgesperrt, daß eingeschlossene Luftblasen gebildet werden, die nach Zusammenbau der Teile zunächst als Federn wirken, jedoch mit der Zeit ihren Innendruck verlieren, so daß eine solche Dichtung weniger stark angepreßt wird und "relaxiert". Wenn die Dichtung in der abzudichtenden Fuge zusammengepreßt wird, wirken gewisse Bereiche u. a. als Druckstreben und andere als Zugstreben. Die Druckstreben können in Richtung der Hohlräume ausweichen und sich ausdehnen, wobei die Zugstreben unter Zugspannung geraten. Dadurch wird eine - gegenüber einem Vollkörper - bessere innere Spannungsverteilung der Dichtung geschaffen, um unterschiedlich weite Fugen und Spalten abzudichten, ohne daß die Anpreßkraft der Dichtung an den Teilen dabei eine übermäßige Zunahme erfährt. Der Dichtungskörper ist aus unterschiedlichen Materialien mit unterschiedlichen Härten aufgebaut sein, und der Dichtungskörper außen aus weicherem Material besteht, um sich den Rauhigkeiten und Unebenheiten von Teilen oder Baukörpern besser anpassen zu können, währen die Zug- und Druckstreben im Kernbereich aus festerem und härterem Material bestehen um die nötige Anpressung der Dichtung an die abzudichtenden Teile oder Baukörper zur Erzielung der Dichtigkeit sicherzustellen. Die Anpressung der Dichtung an die abzudichtenden Teile kann noch dadurch erhöht werden, daß die Hohlräume der Dichtung mit dem druckhöheren Raum verbunden sind, so daß der an sich abzudichtende Druck bei der Abdichtung selbst unterstützend wirkt.

Der Dichtungskörper kann bei Rohren entweder auf das Spitzende aufgezogen werden oder in die Muffe (Glocke) eingelegt oder einbetoniert werden.

Bei solchen ineinanderzuschiebenden Rohren können an dem Dichtungskörper Hohlräume (Taschen) untergebracht sein, die eine Schmierfunktion haben können. Ganz allgemein können Hohlräume bzw. Vertiefungen, die ein Nachdichtungsmaterial in Gel- oder Festform enthalten (d. h. solche, die bei Feuchtigkeit oder Wasserkontakt aktiv werden und damit zusätzlich dichten) angewendet werden.

In der Ausführungsform als Zwillingsdichtung können Dichtigkeits-sichtkontrollen oder Dichtigkeits-Erstprüfungen sowie Wiederholungsprüfungen mit Luft oder Wasser durchgeführt werden. Die Prüfung kann für beispielsweise jede Rohrfuge einzeln ausgeführt werden oder (bei entsprechender Ausgestaltung) zentral für einen ganzen Rohrstrang. Außerdem kann bei Feststellung von Undichtigkeit ein Ringraum, der zwischen zwei Dichtkörpern angeordnet ist, mit Nachdichtungsmaterial gefüllt werden. Der direkte Zugang zu diesem Ringraum (Prüf- und Nachdichtungsraum) kann so gestaltet werden, daß keine Schwächung durch Zusatzbohrungen in den ineinander gefügten Rohren erfolgt.

Weitere Einzelheiten werden anhand der Zeichnungen beschrieben. Dabei zeigt:
- Fig. 1: einen Querschnitt durch eine Dichtung,
- Fig. 2: den Einbau der Dichtung zwischen Betonteilen in schematischer Darstellung,
- Fig. 3: eine Darstellung mit härterem Innenteil und weicherem Außenteil,
- Fig. 4: eine vereinfachte Ausführungsform für kleinere Dichtungskörper mit härterem Innenteil und weicherem Außenteil,
- Fig. 5: eine Dichtung mit Einführungsteil, mit Kanälen als Zugang zu Hohlräumen, um den Anpreßdruck durch zugeführten Innendruck zu erhöhen, sowie mit Hohlräumen bzw. Taschen zum Schmieren oder zum Nachdichten,
- Fig. 6: eine Variante mit Hohlräumen oder Taschen,
- Fig. 7: eine weitere Ausführungsform der Dichtung mit Hohlräumen zum Schmieren und mit Hohlräumen für Nachdichtungsmaterial,
- Fig. 8: die Dichtung der Fig. 7 in vereinfachter Ausführung,
- Fig. 9: eine Dichtung der Fig. 5 mit einem Gelenkteil (Auflager) zur Lastverteilung und Scherlastbegrenzung für den Einbauzustand,
- Fig. 10: eine Dichtung der Fig. 5 mit obenliegendem Gleitmantel,
- Fig. 11: eine Dichtungt wie in Fig. 5, jedoch zum Einbau in die Muffe von Rohren,
- Fig. 12: eine Variante zur Dichtung nach Fig. 11,
- Fig. 13: eine weitere Ausführungsform der Dichtung für parallele Bauwerksfugen,
- Fig. 14: die Dichtung nach Fig. 13 nach dem Einbau,
- Fig. 15: eine Sekundärdichtung für parallele Fugen, beispielsweise für Rohrvortrieb, ausgelegt zur Nachdichtung,
- Fig. 16: die Dichtung der Fig. 15 nach Einbau,
- Fig. 17: eine Sekundärdichtung für parallele Fugen, beispielsweise für Rohrvortrieb, ausgelegt zur Nachdichtung,
- Fig. 18: die Dichtung der Fig. 17 nach Einbau,
- Fig. 19: ein Doppeldichtungssystem, mit einer Primärdichtung und einer Sekundärdichtung, die über einen Verbindungsschlauch gleichzeitig aktiviert werden,
- Fig. 20: eine Dichtung im eingebauten Zustand, bei der eine Gegendichtfläche mit Elastomer bekleidet ist,
- Fig. 21: eine Zwillingsdichtung auf einem Spitzende,
- Fig. 22: bis Fig. 25 abgewandelte Zwillingsdichtungen mit Lagesicherung als Spitzendichtung,
- Fig. 26: eine Zwillingsdichtung zum Einbau in eine Muffe,
- Fig. 27: eine weitere Muffen-Zwillingsdichtung,

- Fig. 28: einen Kontrollzugang zu den Prüfräumen einer Zwillingsdichtung,
- Fig. 29: einen weiteren Kontrollzugang zu den Prüfräumen einer Zwillingsdichtung,
- Fig. 30: eine schematische Darstellung einer Rohrleitungs-Prüfstrecke.

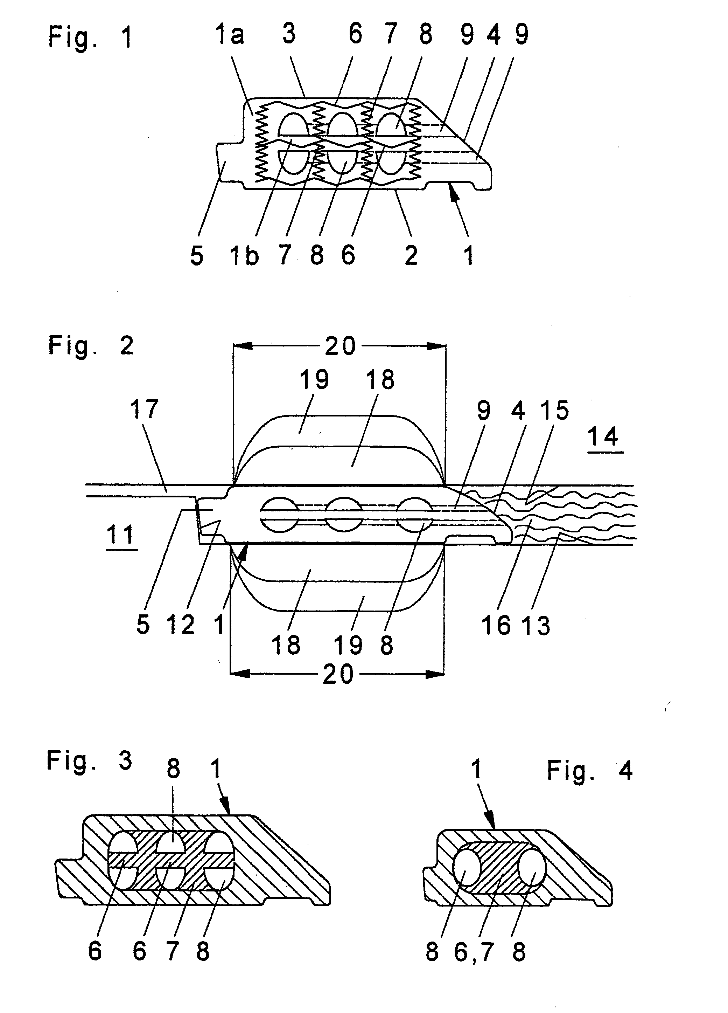

Fig. 1 zeigt einen Querschnitt durch eine Dichtung. Es ist ein Dichtungskörper 1 aus einem ersten Elastomer 1a und einem zweiten Elastomer 1b vorgesehen. Unter einem Elastomer sind alle elastischen Werkstoffe zu verstehen, die als Dichtungsmaterial in Betracht kommen. Darunter zählen gummielastische Werkstoffe, Polyurethan und Polyvinylchloride. Der Dichtungskörper ergibt im Querschnitt etwa einen Rhombus. Eine untere Basisseite 2 und eine obere Deckseite 3 laufen parallel zueinander und dienen als Dichtflächen. Ein Einführungsabschnitt 4 weist eine Schrägfläche als Montagehilfe auf. Eine Seite mit Ansatz 5 dient zur Abstützung nach Einbau. Im Inneren des Dichtungskörpers 1 sind Hohlräume 8 stockwerkartig übereinander vorgesehen. Das zweite Elastomer 1b ist fester und härter als das erste Elastomer 1a und bildet Zugstreben 6 sowie Druckstreben 7, die relativ zu ihrer Länge ziemlich dick sind. Die Zug- und Druckstreben 6, 7 sind fachwerkartig angeordnet und trennen die Hohlräume 8. Die Hohlräume 8 sind über Kanäle 9 mit der Schrägfläche des Einführungsabschnitts 4 der Dichtung verbunden, die bei zusammengepreßter Dichtung von der Schrägfläche aus als Sacklöcher in die Hohlräume 8 gebohrt worden sind, um auch im belasteten Zustand der Dichtung durchgängige Kanäle zu bilden. Die Kanäle 9 sorgen für die Entlüftung der Hohlräume 8, so daß sich dort keine Luftblasen hohen Druckes bei montierter und zusammengepreßter Dichtung bilden können, die sich mit der Zeit entspannen und so zu Relaxion einer solchen Dichtung mit Druckluftblasen führen würden.

Die Dichtung kann durch Koextrusion von weicherem (1a) und härterem (1b) Elastomermaterial hergestellt werden. Der extrudierte Strang wird in Stücke passender Länge geschnitten und kann in entsprechender Umgebung unmittelbar als Dichtung eingesetzt werden. Es ist aber auch möglich, die Schnittenden solcher Strangstücke miteinander zu vulkanisieren, um daraus Dichtungsringe herzustellen. Solche Dichtungsringe können unmittelbar auf das Spitzende eines Betonrohres aufgezogen werden. Es ist auch möglich, eine solche Ringdichtung in der Muffe eines Betonrohres zu verankern.

Die Anwendung eines derartigen Dichtungsringes zur Abdichtung der Lücke zwischen abzudichtenden Teilen oder Baukörpern ist schematisch in Fig. 2 dargestellt. Ein Hauptanwendungsgebiet ist der Kanalbau mit Betonrohren. Ein erstes Rohr weist ein Spitzende 11 auf, das durch eine radiale Schulterfläche 12 und eine sich axial erstreckende Fläche 13 gebildet wird. Das andere Rohr weist eine Muffe 14 auf, von der die axiale Fläche 15 angedeutet ist. Die Flächen 13 und 15 sind parallel zueinander angeordnet. Wenn die Rohrenden 11 und 14 ineinander geschoben werden, verbleiben ein Muffenspalt 16 und ein Schulterspalt 17. Zwischen der druckhöheren Seite des Muffenspaltes 16 und der druckniedrigeren Seite mit dem Schulterspalt 17 liegt die Dichtung 1. Die Fuge 16 ist dünner, als es der Dicke des Dichtungskörpers 1 entspricht, hat aber die gleiche Form. Deshalb stößt beim Zusammenbau der Rohrenden 11 und 14 die Rohrmuffe 14 gegen die Schrägfläche des Einführungsteils 4 und drückt die Dichtung zusammen. Dabei geraten die Streben 7 unter Druck und weichen zum Teil in Richtung der Hohlräume 8 aus, wobei ein Teil der Streben 6 unter Zugspannung gerät. Insgesamt verkleinern sich die Hohlräume 8, wie in Fig. 2 dargestellt. Die Streben 6, 7 entwickeln eine Rückstellkraft, die sich als Anpreßdruck entlang der Berührungsflächen 2, 3 der Dichtung 1 mit den abzudichtenden Teilen 11 und 14 bemerkbar macht, wie durch Druckfelder 18 angedeutet. Der hydrostatische Druck im Spaltbereich 16 gelangt über die Kanäle 9 in die Hohlräume 8 und führt zu einer Anpreßdruckerhöhung, wie durch die Druckfelder 19 angedeutet. Die Druckfelder 18, 19 wirken entlang des gesamten Abdichtungsabschnitts 20 der Dichtung, welches die Gesamtbreite der Dichtung im verformten Zustand minus den Bereichen 4 und 5 ist.

Durch geeignete Wahl des ersten Elastomers 1a und der Breite des Abdichtungsabschnitts 20 hat man es in der Hand, Rauheiten und Unebenheiten der Oberflächen 13 und 15 zu überbrücken und einzuhüllen. In dieser Hinsicht ist eine Funktionstrennung zwischen dem Randbereich aus weicherem Material 1a und dem Kernbereich mit den Streben 6, 7 aus härterem Material 1b günstig, da sich das weichere Material des Grundkörpers 1 solchen Unebenheiten besser anpassen kann, ohne eine erhöhte Rückstellkraft erbringen zu müssen, die von den härteren Streben 6, 7 aufgebracht werden kann. Das härtere Elastomer 1b hat noch den Vorzug einer geringeren Relaxion gegenüber weicherem Elastomer, so daß durch den Strebenaufbau die Zusammenpreßbarkeit wie bei weicheren Material erzielbar ist, ohne den Nachteil der Relaxion in Kauf nehmen zu müssen, die bei weicherem Material nach einiger Zeit eintritt und dann die Abdichtwirkung vermindert.

Die Hohlräume 8 weisen eine doppelte Funktion auf: Bereitstellung von Ausweichraum für die Streben und Angriffsflächen für das Druckmedium. Ohne Kanäle 9 würde Luft in den Hohlräumen 8 eingeschlossen werden, die mit der Zeit nach außen diffundiert und zur Relaxation der Dichtung führt, wodurch die Rückstellkraft und damit die Wirksamkeit der Abdichtung gemindert werden.

Fig. 3 zeigt eine Ausführungsform der Dichtung, bei der das härtere Elastomer 1b auf einen engeren Kontaktbereich beschränkt ist, wodurch die Zugstreben 6 nur in der Mitte zwischen den Hohlräumen 8 vorgesehen sind. Damit übernimmt das weichere Material 1a oberhalb und unterhalb der Hohlräume 8 neben der Einhüllfunktion von Unebenheiten und Rauhigkeiten eine derartige Funktion von Zug- und Druckstreben. Die Druckstreben 7 aus härterem Material erstrecken sich ebenfalls nur zwischen den Hohlräumen 8, während seitlich von den Hohlräumen das weichere Material 1a vorhanden ist und an Stellen verringerten Anpreßdrucks als Druckstrebe wirkt.

Fig. 4 zeigt eine vereinfachte Ausführungsform der Dichtung 1 für kleinere Querschnitte, und zwar gibt es nur eine Reihe von Hohlräumen 8 anstelle von deren zwei, die stockwerkartig übereinander liegen, wie bei dem Ausführungsbeispiel der Fig. 1 und 3. Der Raum zwischen den Hohlräumen 8 ist mit härterem Elastomer 1b gefüllt, das die Funktion der Streben 6 und 7 übernimmt.

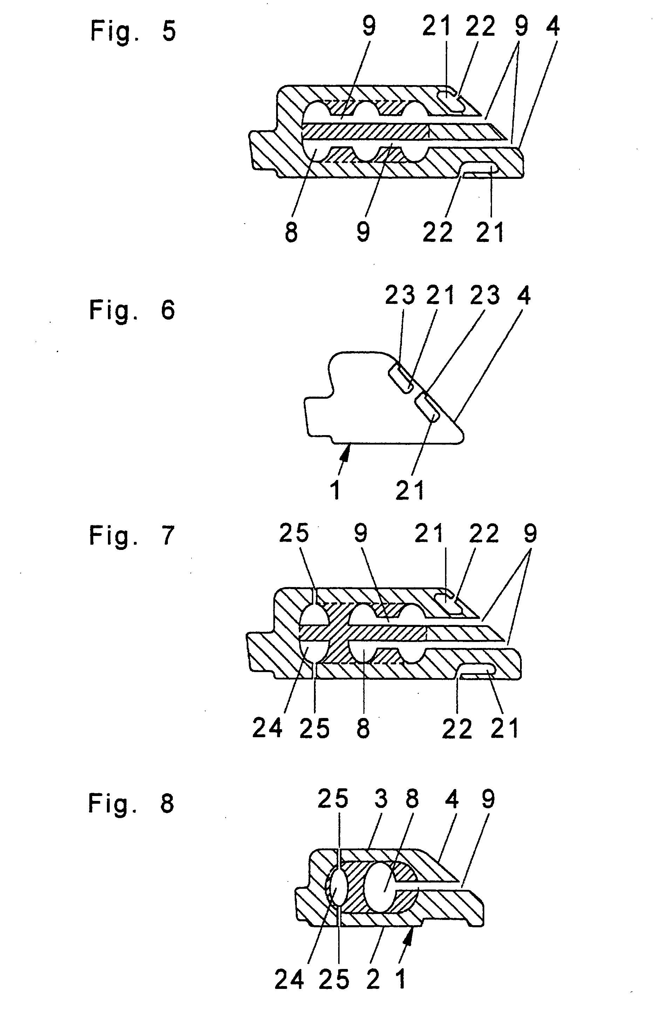

Fig. 5: Das Ineinanderstecken von Rohren, wie anhand der Fig. 2 beschrieben, ist mit beträchtlichem Kraftaufwand verbunden, und zwar nicht nur, weil die Dichtung zusammengepreßt werden muß, sondern auch, weil die Relativverschiebung zu großen Reibungskräften führt. Zur Verminderung dieser Reibungskräfte werden allgemein Gleitmittel angewendet, und dieses ist bei der vorliegenden Dichtung gemäß Fig. 5 bequem möglich. Es sind Hohlräume 21 zur Bildung von Schmiertaschen vorgesehen, die über Schlitze 22 oder Aufbruchstellen nach außen führen. Bei Druck auf den Einführungsabschnitt 4 tritt das Schmier- oder Gleitmittel aus und erleichtert den Zusammenbau der Teile. Als Gleitmittel kann auch Nachdichtungsmaterial in Flüssig- oder Gelform verwendet werden. Beispielsweise werden quellfähige Polymere in Verbindung mit Feuchtigkeit oder Wasser aktiv und dichten Kriechundichtigkeiten ab.

Fig. 6 zeigt eine Abwandlung der Schmiertaschen 21, und zwar sind die Schlitze 22 durch dünne Häute 23 abgedeckt, die bei Druckeinwirkung auf den Einführungsbereich 4 aufplatzen, so daß das innenliegende Material mit ansteigendem Druck austreten kann.

Fig. 7 zeigt einen ähnlichen Querschnitt wie den der Fig. 5, jedoch ist ein Teil 24 der Hohlräume 8 mit Nachdichtungsmaterial gefüllt, das über Perforationen 25 oder aufbrechbare Stellen austreten kann. Man kann alle Fachwerkzwischenräume mit Schmier- und/oder Nachdichtungsmaterial füllen, wobei dann die Kanäle 9 fortfallen können, weil eine Entlüftung der Räume 8 nicht mehr benötigt wird.

Fig. 8 zeigt eine weitere vereinfachte Ausführungsform gegenüber der Fig. 7, und zwar gibt es nur einen Hohlraum 8 mit einem Kanal 9 und einen Hohlraum 24 für Nachdichtungsmaterial mit Austrittsperforationen 25.

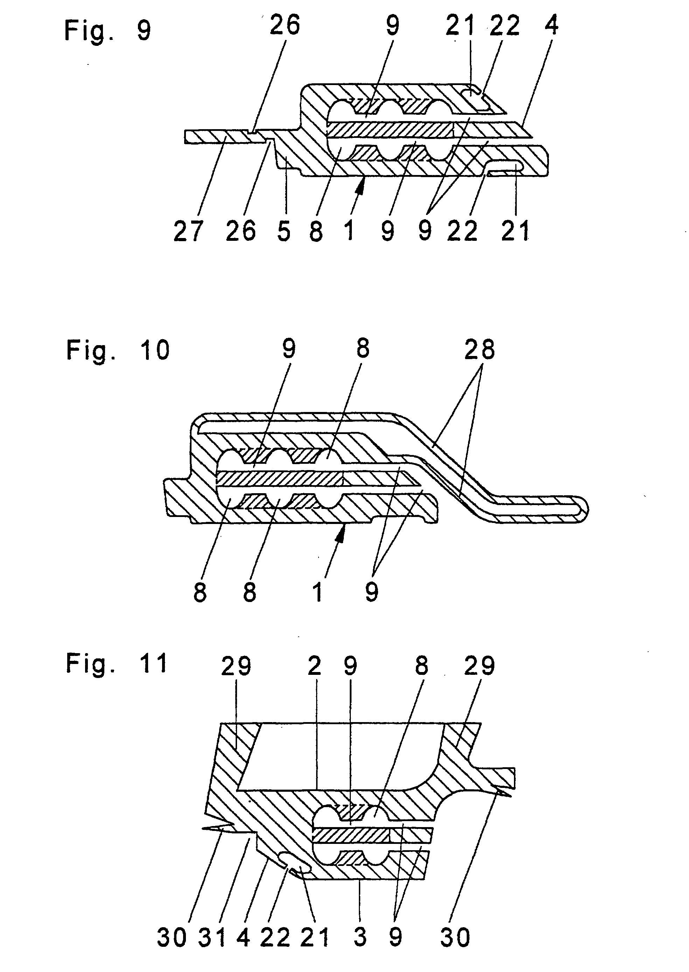

Fig. 9 zeigt einen ähnlichen Querschnitt wie den der Fig. 5, jedoch ist an dem Ansatz oder der Schulterstütze 5 ein Lappen 27 über zwei Gelenke 26 angeschlossen, um sich in den Schulterspalt 17 (Fig. 2) zu erstrecken. Dort wird der Lappen 27 als Lastverteiler und auch als Scherlastbegrenzer wirksam.

Fig. 10 zeigt eine Ausführungsform, bei der ein Gleitmantel 28 die Funktion der Reibungsverminderung und die Lastverteilung übernimmt. Der Gleitmantel 28 wird beim Zusammenstecken von Rohren in den Schulterspalt 17 geschoben und vom Einführungsbereich weg geführt, so daß die Kanalöffnungen 9 nach Zusammenbau unverdeckt sind und nicht blockiert werden.

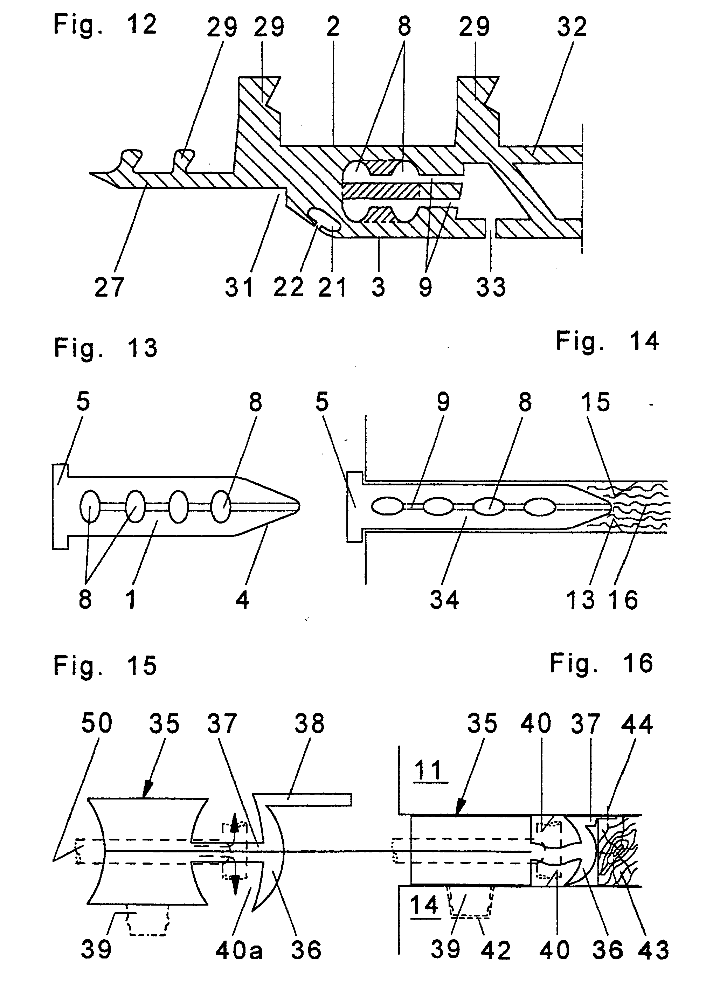

Fig. 11 zeigt eine Dichtung zum integralen Einbau in eine Rohrmuffe bei deren Herstellung aus Betonmischung. Hierzu sind Verankerungsteile 29 vorgesehen. Um die Betonmischung bzw. Zementbrühe von der Dichtfläche 3 fernzuhalten, sind Dichtlippen 30 angebracht. In Einschubrich-tung vorne befindet sich eine Halbnut 31 zur Bildung eines Anschlages für eine sogenannte Untermuffe, die als Gießform bei der Herstellung der Rohrmuffe dient, in welcher die Dichtung integriert wird. Zwischen radialer Rohrmuffenschulter und Dichtung befindet sich ein ringförmiger Manövrierraum für das Spitzende, der von einem entfernbaren Füllkörper eingenommen wird. Die Dichtung ist ohne diesen Füllkörper dargestellt.

Fig. 12 zeigt eine Dichtung, ebenfalls zum integralen Einbau in eine Rohrmuffe, jedoch mit einem nachgiebigen Füllkörper 32 und einem Lastverteilungselement bzw. Scherlastbegrenzer 27, die an die eigentliche Dichtung angeschlossen sind. Der Zugang zu den Kanälen 9 wird über Öffnungen 33 gesichert. Die Dichtung wird über die Verankerungsteile 29 in die Rohrmuffe integriert.

Fig. 13 und 14 zeigen die Verwendung der neuen Dichtung in einer Ausführungsform als Dichtungsstreifen. Die Querschnittsform 34 dieser Dichtung ähnelt etwa einem Nagel. Alternativ ist auch ein geschlossenes Rahmenprofil möglich. Fig. 13 zeigt die Dichtung im unverformten Zustand. Der innere Aufbau entspricht den anhand der Fig. 1 bis 4 erläuterten Prinzipien. Das Einführungsteil 4 weist eine Keilform mit zwei Schrägen auf, damit die Dichtung in eine bestehende parallele Bauwerksfuge eingetrieben werden kann, wie in Fig. 14 dargestellt.

Fig. 15 zeigt einen Querschnitt durch eine Sekundärdichtung für den Einsatz beispielsweise im unterirdischen Rohrvortrieb, die im Verbund mit einer Primärdichtung nach einer der beschriebenen Ausführungsformen arbeitet. Die Sekundärdichtung sitzt dabei in einem radialen Ast 40 des Muffenspaltes. Die Dichtung enthält einen Dichtkörper 35 und einen T-förmigen Fortsatz 36, 37 aus Steg 37 und Querbalken 37. An einem Ende des Querbalkens 37 befindet sich ein Lappen 38 zu Befestigungszwecken. Zu Befestigungszwecken kann auch ein Fortsatz 39 dienen. Eine Befüllvorrichtung 50 mit Schlauch und Rückschlagventil führt durch den Dichtkörper 35 in Räume 40a des radialen Muffenspaltes 40, um Nachdichtungsmaterial zwischen Dichtkörper 35 und Fortsatz 36, 37 einzuführen.

Fig. 16 zeigt die Sekundärdichtung der Fig. 15 im eingebauten Zustand zwischen Spitzende 11 und Muffe 14, und zwar an der Innenseite des radialen Spaltes 40, den diese beiden Rohre bilden. Zum Rohrvortrieb werden Hölzer als Lastverteilungselemente 43 und die Dichtung 35, 36, 37 in diesen radialen Spalt 40 eingelegt, wobei der Fortsatz 39 in eine Nut 42 der Rohrmuffe 14 eingreift, um die Dichtung zu halten. Alternativ kann die Befestigung der Dichtung mittels Lappen 37 an dem Holz 43 über Nägel 44 erfolgen. Beim Vortrieb der Rohre wird die Sekundärdichtung 35 komprimiert, weil sich die Flanken bei der Montage der Rohre aufeinander zu bewegen, bis das Ausgleichs- sowie Lastverteilungselement 43 die weitere Komprimierung begrenzt.

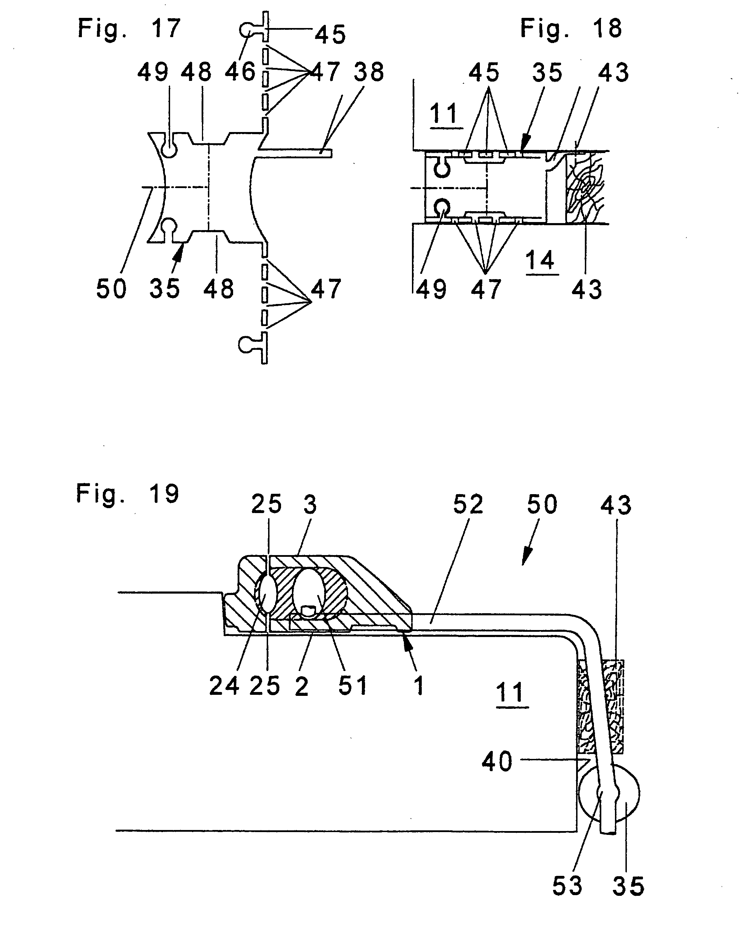

Fig. 17 und 18 zeigen einen Querschnitt durch eine weitere Sekundärdichtung zum Einsatz beispielsweise im unterirdischen Rohrvortrieb. Die Dichtung besteht aus einem Dichtkörper 35, der Aussparungen oder Taschen 48 für Nachdichtungsmaterial sowie Abdecklappen 45 mit Perforationen 47 und Knüpfnocken 46 enthält. Die Taschen 48 werden mittels der Abdecklappen 45 und der Knüpfnocken 46 geschlossen, die in eine Nut 49 des Dichtkörpers 35 einrasten. Damit entsteht ein einheitlicher Dichtkörper, bei dem Nachdichtungsmaterial aus den Taschen 48 bei Komprimierung der Dichtung austreten kann. Die Montagebefestigung der Dichtung, beispielsweise an dem schon am Rohr fixierten Holzring 43, kann über Nägel 44 oder durch Verkleben geschehen (Fig. 18). Das Nachdichtungsmaterial kann nach dem Einbau auch zu einem späteren Zeitpunkt über die Befüllungsvorrichtung 50 eingeführt werden.

Fig. 19 zeigt eine Befüllvorrichtung 50 als Verbundsystem zwischen Primärdichtung 1 und Sekundärdichtung 35, die mit einem Injektionsmittel aktivierbar sind, wobei über einen in der Befüllvorrichtung erzeugten zusätzlichen Anpreßdruck eine bessere Abdichtung erzeugt wird. Die Primärdichtung 1 weist einen oder mehrere Hohlräume 51 auf, die über einen Druckschlauch 52 mit der Befüllvorrichtung 50 und der Dichtung 35 und deren Hohlraum oder Hohlräume 53 verbunden sind. In den oder die Hohlräume 51 und den oder die Hohlräume 53 wird ein aushärtendes Mittel unter Druck injiziert und aushärten lassen.

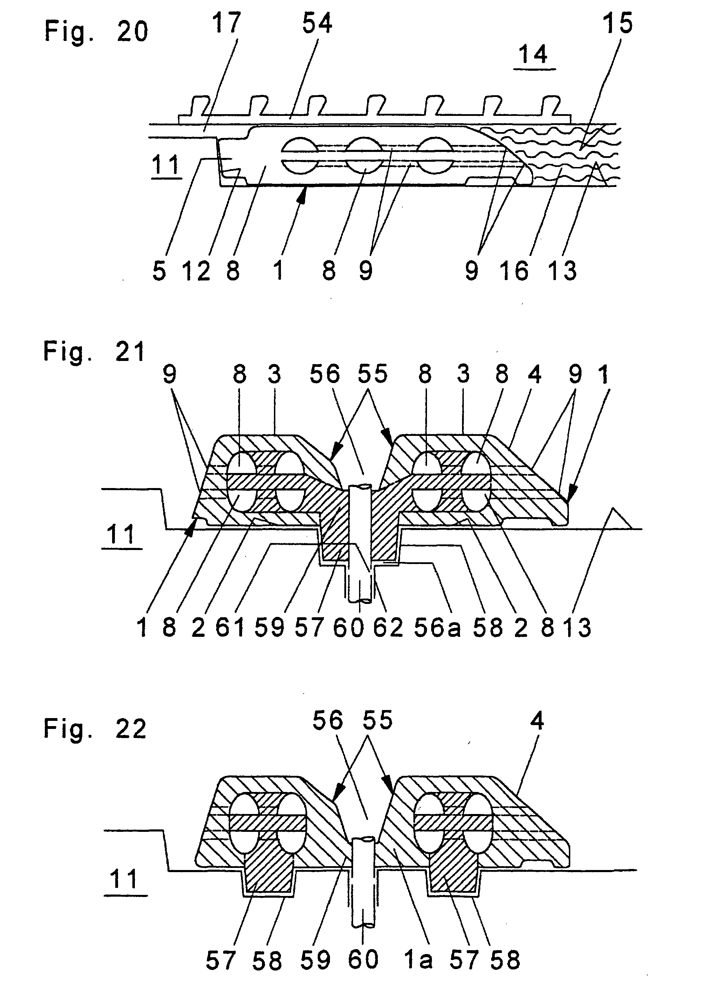

Fig. 20 zeigt ein Abdichtsystem mit Verschweißung. Zu diesem Zweck ist ein zusätzliches Elastomerformteil 54 in die axiale Fläche 15 der Rohrmuffe 14 einbezogen. Dieses verschweißt bei andauerndem Druck mit der Zeit mit dem Dichtkörper 1.

In Fig. 21 ist eine Dichtungsanordnung 55 mit zwei gekoppelten Einzeldichtungen 1 dargestellt, zwischen denen sich ein Prüfraum 56 erstreckt. Diese beiden Dichtungen 1 sind über einen Steg 59 miteinander verbunden, der mit einem Haltefortsatz 57 radial nach innen reicht, um sich in einer Nut 58 der Ringfläche 13 des Spitzendes 11 zu halten, wobei jedoch noch ein Prüfraum 56a am Boden der Ringnut freigelassen wird. Eine Prüfleitung 60 öffnet sich in beide Prüfräume 56 und 56a, wobei im dargestellten Ausführungsbeispiel die Prüfleitung 60 Perforationen 61 aufweist, die den Zugang zum Prüfraum 56a gewähren. Die Prüfleitung 60 ist durch eine Bohrung 62 in das Rohrinnere und von dort zu einer nicht dargestellten Prüfeinrichtung geführt.

Der Prüfraum 56 wird bei montiertem Rohrstrang von der Ringfläche 15 der Rohrmuffe abgedeckt. Demgemäß dient der Prüfraum 56 zur Dichtigkeitsüberprüfung an der Ringfläche 15, während der Prüfraum 56a zur Überprüfung der Dichtigkeit an der Fläche 13 dient. Es wird ein Druckmedium in die Prüfräume 56 und 56a gepreßt und der Druckabfall beobachtet. Wenn der zeitliche Druckabfall unter einem vorgegebenen Wert liegt, wird die Abdichtung als gegeben beurteilt und dokumentiert.

Als Druckmedium kann Luft oder eine Flüssigkeit, beispielsweise Wasser, verwendet werden. Im Falle der Verwendung von Wasser als Prüfmedium sollte der Prüfraum 56 entlüftet werden, was beispielsweise über ein Doppelrohrsystem statt eines einfachen Schlauches geschehen kann. Eine solche Entlüftung wird auch dann vorgenommen, wenn die Prüfräume 56 und 56a zum Nachdichten der Rohrmuffenverbindung verwendet werden sollten, was über die Prüfleitung 60 möglich ist.

Eine abgewandelte Dichtungsanordnung 55 ist in Fig. 22 gezeigt. Hier besteht der Verbindungssteg 59 aus dem weichen Elastomermaterial 1a. Jede Teildichtung 1 besitzt einen Haltefortsatz 57 aus dem härten elastomeren Material 1b und greift in eine entsprechende Nut 58 der Ringfläche 13 am Spritzende 11 ein. Dadurch wird die Dichtungsanordnung 55 an der Verschiebung gehindert, wenn bei der Montage des Rohrstranges die Muffe über die Dichtung geschoben wird.

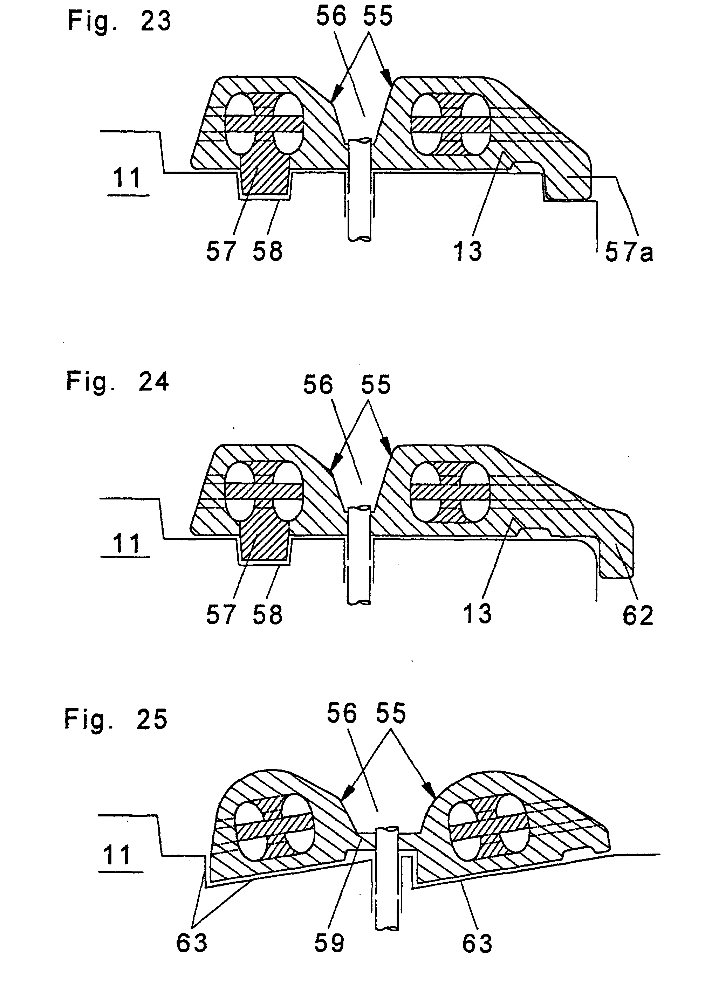

Weitere Möglichkeiten der Halterung der Dichtungsanordnung 55 gegen Verschiebung sind in den Fig. 23 und 24 dargestellt. Neben dem Haltefortsatz 57 für die eine Teildichtung gibt es einen weiteren Haltefortsatz 57a an der anderen Teildichtung, wobei dieser Haltefortsatz 57a entweder in einer Randaussparung des Spitzendes eingreift (Fig. 23) oder an der vorderen Radialfläche des Spitzendes anliegt (Fig. 24).

Wie Fig. 25 zeigt, kann die Lagesicherung der Dichtungsanordnung 55 auch über Schrägnuten 63 in der Ringfläche 13 des Spitzendes erfolgen.

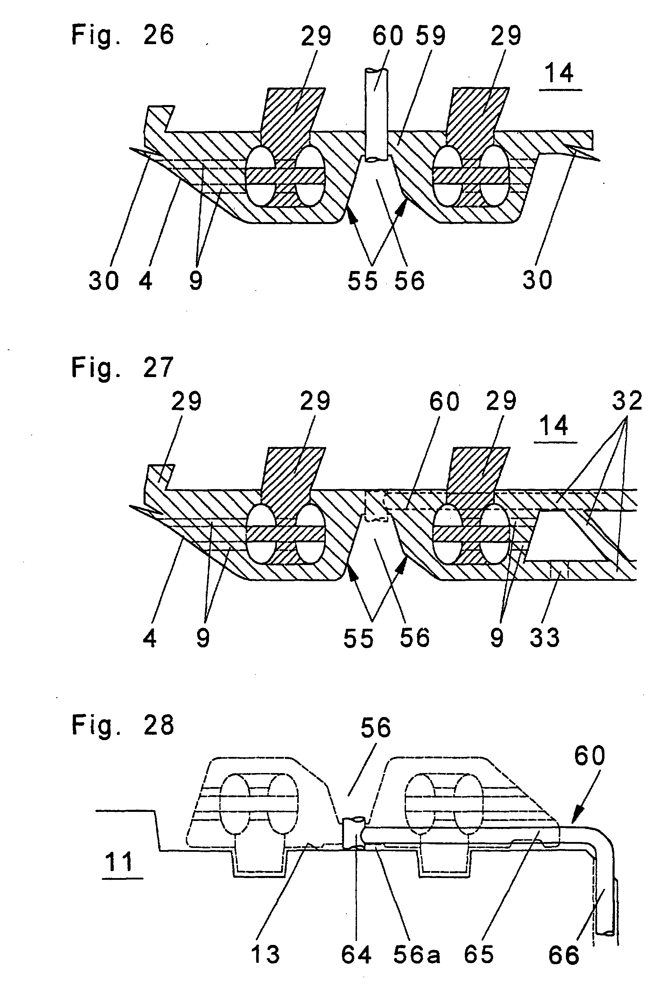

Die Zwillingsdichtungsanordnung 55 kann auch in der Glockenmuffe integriert werden, wie die Fig. 26 und 27 zeigen. Zum Einbau wird auf die Beschreibung der Fig. 11 und 12 Bezug genommen. Die Prüfleitung 60 kann radial nach außen (Fig. 26) oder axial innerhalb des Rohrstranges zu dem Prüfgerät geführt werden.

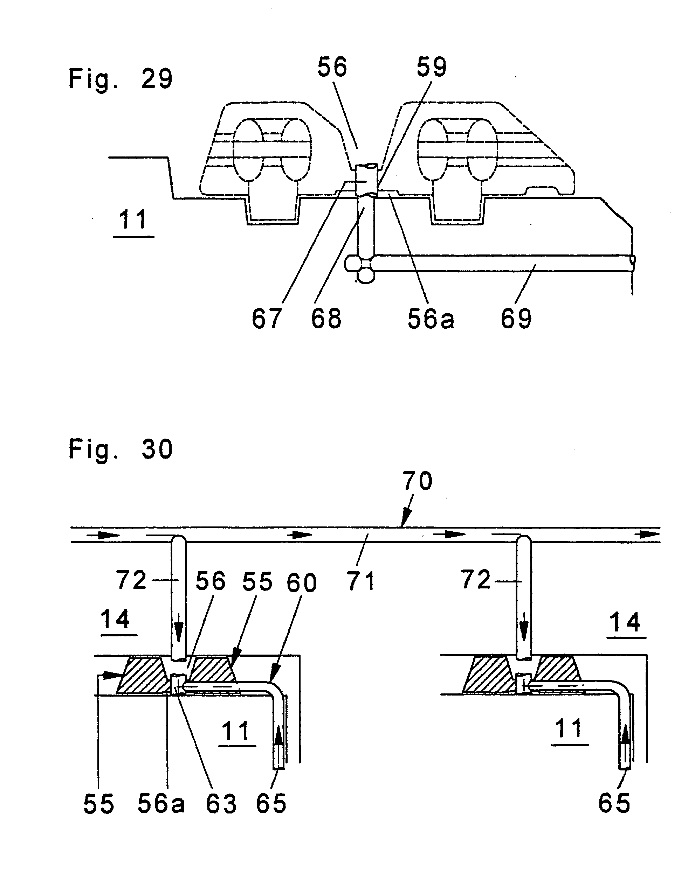

Fig. 28 und 29 zeigen weitere Möglichkeiten der Prüfleitungsführung. Die Prüfleitung 60 kann über die Ringfläche 13 des Spitzendes und eine Vertiefung in der radialen Vorderseite des Spitzendes geführt werden, und hierzu werden Röhrchen 64, 65, 66 (Fig. 28) verwendet. Man kann auch über Bohrungen im Spitzende arbeiten, und zwar einer radialen Bohrung 68 und einer achsparallelen Bohrung 69 (Fig. 29). Die beiden Prüfräume 56 und 56a werden über eine Bohrung im Verbindungssteg der Teildichtung miteinander verbunden. Die Bohrung kann auch durch einen metallischen Rohrstutzen 67 gebildet werden, der in den Verbindungssteg 59 einvulkanisiert ist.

Wie erwähnt, kann die Prüfleitung 60 auch zum Nachdichten der Abdichtstellen ausgenutzt werden. Es ist aber auch möglich, für diesen Zweck zwei getrennte Systeme 60 und 70 zu verwenden, wie in Fig. 30 dargestellt. In einem solchen Fall enthält jedes der Systeme 60, 70 Rückschlagventile, so daß Medium zwar in die Prüfräume 56 und 56a gefördert, der Austritt dieses Mediums durch das jeweils andere System aber gesperrt wird. Das System 70 enthält eine Verbindungsleitung 71, die von einer zentralen Stelle aus, beispielsweise einem Prüfschacht, in dem Erdreich entlang des zu überprüfenden Rohrstrangs verlegt ist und die Zweigleitungen 72 mit Rückschlagventilen enthält, die zu den einzelnen zu überprüfenden Dichtungsanordnungen 55 führen. Falls Undichtigkeiten festgestellt werden, kann über das System 60 nachgedichtet werden.

Verlegte Rohrstränge können in folgenden Stufen geprüft werden:
- Sichtprüfung der Fugen bei den Rohrmuffen von Fuge zu Fuge durch Begehen der Rohre oder mittels Roboter;
- Dichtigkeitsprüfung mit Luft oder Wasser, die von Rohrfuge zu Rohrfuge vorgenommen wird;
- Dichtigkeitsprüfung von Rohrfuge zu Rohrfuge mit der Möglichkeit zum einmaligen Nachdichten;
- Dichtigkeitsprüfung von Rohrfuge zu Rohrfuge mit der Möglichkeit des Nachdichtens mit speziellem Nachdichtmaterial, welches mehrmaliges Nachdichten ermöglicht;
- Gesamtprüfung des Rohrstranges auf Dichtigkeit;
- bei Feststellen von Undichtigkeiten Nachdichten an der undichten Stelle.

## Patentansprüche

1. Abdichtung von Fugen zwischen einem druckhöheren Raum und einem druckniedrigeren Raum an abzudichtenden Teilen und Baukörpern, insbesondere Kanälen aus Betonrohren und Schachtbauwerken, mit folgenden Merkmalen:
ein Dichtungskörper (1) in der abzudichtenden Fuge (16) weist einen Einführungsabschnitt (4) und einen Abdichtungsabschnitt (20) mit Hohlräumen (8; 24; 51) auf, die einen Teil des Dichtungskörpers nach Art eines Fachwerkes untergliedern, wobei der Abdichtungsabschnitt (20) Dichtflächen (2, 3) etwa gemäß der Form des abzudichtenden Abschnitts der Fuge (16) aufweist,
**dadurch gekennzeichnet, dass** der fachwerkartig untergliederte Teil des Dichtungskörpers (1) den Abdichtungsabschnitt (20) gänzlich einnimmt und die alleinige Dichtung bildet, wobei im Belastungsfall gewisse Bereiche des Abdichtungsabschnittes als Druckstreben (7) und andere Bereiche als Zugstreben (6) wirken und sich die Druckstreben (7) generell senkrecht zu den Dichtflächen (2, 3) und mit einer solchen Dicke erstrecken, dass sie bei Belastung breit gedrückt werden, jedoch nicht in sich knicken, und
daß der Dichtungskörper (1) einen Randbereich mit weicherem Elastomer (la) und einem Kernbereich mit härterem Elastomer (1b) aufweist, in welchem Kernbereich sich wenigstens die Druckstreben (7) erstrecken.

2. Abdichtung nach Anspruch 1,
**dadurch gekennzeichnet, daß** wenigstens ein Teil der Hohlräume (8) über einen oder mehrere Druckzuführungskanäle (9) mit der abzudichtenden Fuge (16) verbunden ist, um den Druck im druckhöheren Raum zur Erhöhung des Anpreßdrucks auszunutzen.

3. Abdichtung nach einem der Ansprüche 1 bis 2,
**dadurch gekennzeichnet, daß** die Dichtflächen (2, 3) des Abdichtungsabschnitts (20) zueinander parallel sind und dass zwischen den Dichtflächen (2, 3) die Druckstreben (7), die Zugstreben (6) und die Hohlräume (8, 24, 51) angeordnet sind.

4. Abdichtung nach Anspruch 3,
**dadurch gekennzeichnet, daß** die Breite des Abdichtungsabschnitts (20) größer als die Weite der abzudichtenden Fuge (16) ist und in Anpassung auf die Oberflächenrauhigkeiten der abzudichtenden Teile (11, 14) und dem abzudichtenden Druck entsprechend gewählt worden ist.

5. Abdichtung nach einem der Ansprüche 1 bis 4,
**dadurch gekennzeichnet, daß** der Einführungsabschnitt (4) mit fließfähigem Material gefüllte Hohlräume (21) aufweist, die sich bei Druckeinwirkung wenigstens teilweise entleeren, um das fließfähige Material als Gleitmittel und/oder Nachdichtungsmittel wirksam werden zu lassen.

6. Abdichtung nach einem der Ansprüche 1 bis 5,
**dadurch gekennzeichnet, daß** im Abdichtabschnitt (20) ein oder mehrere, mit Nachdichtungsmaterial gefüllte Hohlräume (24) vorgesehen sind, die sich bei Druckeinwirkung wenigstens teilweise entleeren.

7. Abdichtung nach einem der Ansprüche 1 bis 6, **gekennzeichnet durch** einen als Montagehilfe wirksamen Gleitmantel (28), der so angebracht und ausgebildet ist, daß er die zu den Hohlräumen (8) hinführenden Kanäle (9) nach Montage der Dichtung (1) nicht blockiert.

8. Abdichtung nach einem der Ansprüche 1 bis 7,
**dadurch gekennzeichnet, daß** an dem Dichtungskörper (1) ein Stützlappen (27) angeformt ist, der sich in eine Fuge (17) zum druckniedrigen Raum hin erstreckt.

9. Abdichtung nach einem der Ansprüche 1 bis 8,
**dadurch gekennzeichnet, daß** der Dichtungskörper (1) zur Einbindung in eine Rohrmuffe (14) ausgebildet ist und hierzu Verankerungsfortsätze (29) aufweist und daß der Dichtungskörper (1) zur Abstützung (31) an einer Gießform und Abdichtung (30) der einen Dichtfläche (3) gegenüber eindringendem Zementwasser ausgebildet ist.

10. Abdichtung nach Anspruch 2,
**dadurch gekennzeichnet, daß** der Dichtungskörper einen nachgiebigen Manövrierabschnitt (32) aufweist, der mit dem druckhöheren Raum verbunden ist und Durchlaßöffnungen (33) aufweist, um den Druckzuführungskanälen (9) gegebenenfalls höheren Druck zuzuführen.

11. Anordnung, enthaltend eine Abdichtung (1)
nach einem der Ansprüche 1 bis 10 als Primärdichtung und eine Sekundärdichtung (35), die in einem radialen Spalt (40) angeordnet ist sowie Räume (40a, 48) zur Aufnahme von Abdichtungsmaterial aufweist.

12. Anordnung nach Anspruch 11,
**gekennzeichnet durch** eine Zuführeinrichtung (50) für Abdichtungsmaterial, welche den Füllräumen (40a, 48) der Sekundärdichtung Abdichtungsmaterial unter Druck zuzuführen ermöglicht.

13. Anordnung nach Anspruch 11 oder 12,
**dadurch gekennzeichnet, daß** der die Primärdichtung bildende Dichtungskörper (1) und die Sekundärdichtung (35) über einen Druckschlauch (52) zur Zufuhr von Abstützmaterial miteinander verbunden sind, welches geschlossenen Hohlräumen (51, 53) innerhalb der jeweiligen Dichtung (1, 35) zuführbar ist.

14. Anordnung bzw Abdichtung nach einem der Ansprüche 1 bis 13,
**dadurch gekennzeichnet, daß** eines der abzudichtenden Teile (14) eine Schicht (54) aus einem solchen Material aufweist, welches die Tendenz der Verschweißung mit dem Material des Dichtkörpers (1) aufweist.

15. Anordnung bzw. Abdichtung nach einem der Ansprüche 1 bis 14, **gekennzeichnet durch** eine Zwillingsdichtungsanordnung (55) mit zwei Dichtungskörpern (1), zwischen denen wenigstens ein Prüfraum (56) gebildet wird, der über eine Prüfleitung (60) zu Prüfzwecken und/oder Nachabdichtung von außen zugänglich ist.

16. Abdichtung bzw Anordnung nach Anspruch 15,
**dadurch gekennzeichnet, daß** je ein Prüfraum (56, 56a) auf jeder Dichtungsseite (2, 3) der Zwillingsanordnung (55) vorgesehen sind, die an die gleiche Leitung (60) angeschlossen sind.

17. Abdichtung bzw. Anordnung nach Anspruch 15 oder 16,
**gekennzeichnet durch** Eingriffsmittel (57, 58, 57a, 63) an dem Dichtungskörper (1) und einem der abzudichtenden Teile (11).

18. Abdichtung bzw Anordnung nach einem der Ansprüche 15 bis 17,
**dadurch gekennzeichnet, daß** die Prüf- und/oder Nachdichtungsleitung (60) in den Bereich eines radialen Spaltes (40) zwischen den abzudichtenden Teilen (11, 14) geführt ist, um von dort aus den Zugang zu dem Prüfraum (56, 56a) zu gewähren.

19. Abdichtung bzw. Anordnung nach einem der Ansprüche 15 bis 18, **gekennzeichnet durch** ein Leitungssystem (70), welches Zugang zu mehreren Prüf- und/oder Abdichträumen (56, 56a) gewährt.

## Claims

1. A seal for sealing gaps between a higher pressure space and a lower pressure space at members to be sealed off and at building bodies, in particular sewage channels made up of concrete pipes and concrete shaft structures, the seal comprising:
a seal body (1) in the gap (16) to be sealed off including a leading-in section (4) and a sealing section (20) having cavities (8; 24; 51) which subdivide a portion of the seal body in the manner of a lattice work, the sealing section (20) having sealing surfaces (2, 3) corresponding approximately to the shape of the gap section (16) to be sealed off,
**characterized in that**
the portion of the sealing body (1) which is subdivided in a lattice work manner comprises the sealing section (20) completely and forms the unique sealing, some regions of the sealing section, in the case of a compressive load, working as pressure struts (7) and other regions as drag struts (6) where the pressure struts (7) extend generally perpendicularly to the sealing surfaces (2, 3) with such a thickness so as to become shorter and thicker under compressive load, however, do not bent,
and **in that**
the sealing body (1) includes a rim region of softer elastomer material (1a) and a core region of harder elastomer material (1b), the pressure struts (7) extending at least in the core region.

2. The seal according to claim 1
wherein at least a portion of said cavities (8) is connected to the gap to be sealed off through one or a plurality of pressure admitting passages (9) to enable use of the pressure in said higher pressure space to increase contact pressure of the seal.

3. The seal according to one of the claims 1 or 2
wherein the sealing surfaces (2, 3) of the sealing section (20) are parallel surfaces to one another and wherein the drag struts (6) and the cavities (8, 24, 51) are arranged between the sealing surfaces (2, 3).

4. The seal according to claim 3
wherein the sealing section (20) has a larger width than the width of the gap (16) to be sealed off, the width of the sealing section being made conforming to the surface roughnesses of the members (11, 14) and the pressure to be sealed off.

5. The seal according to one of the claims 1 through 4
wherein the lead-in section (4) has hollows (21) filled with fluid material, the hollows depleting at least partially so as to have the fluid material acting as a lubrication means and/or as a post sealing means.

6. The seal according to one of the claims 1 through 5
wherein one or several cavities (24) which are filled with post-sealing material are provided in the sealing section (20), the cavities depleting at least partially under compressive load.

7. The seal according to one of the claims 1 through 6 further comprising a slide casing (28) helpful when assembling the seal and being formed and arranged so as not to block the passages (9) which lead to the cavities (8) after assembly of the seal (1).

8. The seal according to one of the claims 1 through 7
wherein a flap (27) is formed on the sealing body (1) and extending into a gap (17) to the lower pressure space.

9. The seal according to one of the claims 1 through 8
wherein the sealing body (1) is adapted to be incorporated in a tube socket (14) and includes anchorage portions (29) for that purpose and
wherein the sealing body (1) is formed for abutment (31) at a mold and for sealing (30) of one of the sealing surfaces (3) against cement water.

10. The seal according to claim 2
wherein the sealing body includes a resilient maneuvering section (32) connected to the higher pressure space and including openings (33) so as to admit higher pressure to the passages (9) if necessary.

11. An arrangement comprising a seal (1) according to one of the claims 1 through 10 as a primary seal and a secondary seal (35) which is arranged in a radially extending gap (40) and includes spaces (40a, 48) for accommodating sealing material.

12. The arrangement according to claim 11
further comprising a filling device (50) for sealing material enabling to admit sealing material under pressure to the spaces (40a, 48) to be filled of the secondary seal.

13. The arrangement according to claim 11 or 12
wherein the seal body (1) forming the primary seal and the secondary seal (35) are connected by way of a pressure hose (52) for delivery of setting agent to be injected into closed cavities (51, 53) within the respective seal (1, 35).

14. The arrangement and seal, respectively, according to one of the claims 1 through 13
**characterized in that** one of the members (14) to be sealed comprises a layer (54) of such material which has the tendency to weld to the material of the sealing body (1).

15. The arrangement and seal, respectively, according to one of the claims 1 through 14
**characterized by** a twin seal arrangement (55) having a pair of seal bodies (1) and at least a test space (56) formed therebetween and which can be addressed from outside through a test line (60) for test purposes and/or post sealing.

16. The seal and arrangement, respectively, according to claim 15
wherein each a test space (56, 56a) is arranged on each sealing surface (2, 3) of the twin sealing arrangement (55), the test spaces being connected to the same test line (60).

17. The seal and arrangement, respectively, according to claims 15 or 16
further comprising engaging means (57, 58, 57a, 63) engaging the sealing body (1) and one of the members (11) to be sealed off.

18. The seal and arrangement, respectively, according to one of the claims 15 through 17
wherein the test line and/or the post seal line (60) is/are passed into the region of a radially extending gap (40) between the members (11, 14) to be sealed-off so as to admit access to the test space (56, 56a).

19. The seal and arrangement, respectively, according to one of the claims 15 through 18
further comprising a line system (70) admitting access to a plurality of test spaces and/or post sealing spaces (56, 56a).

## Revendications

1. Etanchéité de joints entre un espace supérieur en pression et un espace inférieur en pression sur des parties et corps de construction à étancher, en particulier des canaux à base de tuyaux en béton et d'ouvrages de puits, avec les caractéristiques suivantes :
un corps d'étanchéité (1) dans le joint (16) à étancher présente une partie d'introduction (4) et une partie d'étanchéité (20) avec des cavités (8 ; 24 ; 51), qui subdivisent une partie du corps d'étanchéité à la façon d'un treillis, la partie d'étanchéité (20) présentant des surfaces d'étanchéité (2, 3) à peu près selon la forme de la partie du joint à étancher (16),
**caractérisé en ce que** la partie subdivisée à la façon d'un treillis du corps d'étanchéité (1) occupe complètement la partie d'étanchéité (20) et constitue le joint unique, certaines zones de la partie d'étanchéité agissant dans le cas de charge comme des montants de pression (7) et d'autres zones comme des montants de traction (6) et les montants de pression (7) s'étendant généralement perpendiculairement aux surfaces d'étanchéité (2, 3) et avec une épaisseur telle qu'elles sont largement comprimées en cas de charge, mais ne se replient pas sur elles-mêmes, et
**en ce que** le corps d'étanchéité (1) présente une zone périphérique avec un élastomère (la) plus souple et une zone centrale avec un élastomère (1b) plus dur, zone centrale dans laquelle s'étendent au moins les montants de pression (7).

2. Etanchéité selon la revendication 1, **caractérisée en ce qu'**au moins une partie des cavités (8) est reliée au moyen d'un ou de plusieurs canaux d'arrivée de pression (9) au joint (16) à étancher, afin d'utiliser la pression dans l'espace supérieur en pression pour augmenter la pression d'appui.

3. Etanchéité selon l'une quelconque des revendications 1 à 2,
**caractérisée en ce que** les surfaces d'étanchéité (2, 3) de la partie d'étanchéité (20) sont parallèles entre elles et **en ce que** les montants de pression (7), les montants de traction (6) et les cavités (8, 24, 51) sont disposés entre les surfaces d'étanchéité (2, 3).

4. Etanchéité selon la revendication 3,
**caractérisée en ce que** la largeur de la partie d'étanchéité (20) est supérieure à la largeur du joint (16) à étancher et a été choisie pour s'adapter aux aspérités de surface des parties (11, 14) à étancher et en fonction de la pression à étancher.

5. Etanchéité selon l'une quelconque des revendications 1 à 4,
**caractérisée en ce que** la partie d'introduction (4) présente des cavités (21) remplies de matériau fluide, qui se vident au moins partiellement lors de l'effet de la pression, afin de rendre le matériau fluide efficace comme agent lubrifiant et/ou agent d'étanchéité complémentaire.

6. Etanchéité selon l'une quelconque des revendications 1 à 5,
**caractérisée en ce que**, dans la partie d'étanchéité (20), il est prévu une ou plusieurs cavités (24) remplies avec du matériau d'étanchéité complémentaire, qui se vident au moins partiellement lors de l'effet de la pression.

7. Etanchéité selon l'une quelconque des revendications 1 à 6,
**caractérisée par** une enveloppe de glissement (28) efficace comme aide au montage, qui est disposée et conçue de façon qu'elle ne bloque pas les canaux (9) allant aux cavités (8) après le montage du joint (1).

8. Etanchéité selon l'une quelconque des revendications 1 à 7, **caractérisée en ce qu'**une patte de support (27), qui s'étend dans un joint (17) en direction de l'espace à pression faible, est formée sur le corps d'étanchéité (1).

9. Etanchéité selon l'une quelconque des revendications 1 à 8, **caractérisée en ce que** le corps d'étanchéité (1) est conçu pour l'intégration dans un manchon de tube (14) et présente à cet effet des prolongements d'ancrage (29) et **en ce que** le corps d'étanchéité (1) est réalisé pour l'appui (31) sur un moule de coulée et un joint (30) d'une surface d'étanchéité (3) par rapport à la pénétration de ciment-eau.

10. Etanchéité selon la revendication 2,
**caractérisée en ce que** le corps d'étanchéité présente une partie de manoeuvre (32) souple, qui est reliée à l'espace supérieur en pression et présente des orifices de passage (33) afin d'amener la pression éventuellement supérieure aux canaux d'arrivée de pression (9).

11. Dispositif contenant une étanchéité (1) selon l'une quelconque des revendications 1 à 10 comme étanchéité primaire et étanchéité secondaire (35), qui est disposé dans une fente radiale (40) et présente des espaces (40a, 48) pour le logement de matériau d'étanchéité.

12. Dispositif selon la revendication 11,
**caractérisé par** un dispositif d'amenée (50) pour du matériau d'étanchéité, qui permet d'amener du matériau d'étanchéité sous pression aux espaces de remplissage (40a, 48) de l'étanchéité secondaire.

13. Dispositif selon la revendication 11 ou 12,
**caractérisé en ce que** le corps d'étanchéité (1) formant l'étanchéité primaire, et l'étanchéité secondaire (35), sont reliés entre eux par un flexible de pression (52) pour l'arrivée de matériau de soutien, lequel peut être amené aux cavités (51, 53) fermées à l'intérieur de l'étanchéité (1, 35) concernée.

14. Dispositif ou étanchéité selon l'une quelconque des revendications 1 à 13,
**caractérisé en ce que** l'une des parties (14) à étancher présente une couche (54) à base d'un tel matériau, qui a tendance à se souder avec le matériau du corps d'étanchéité (1).

15. Dispositif ou étanchéité selon l'une quelconque des revendications 1 à 14,
**caractérisé par** un dispositif de joint jumelé (55) avec deux corps d'étanchéité (1), entre lesquels est formé au moins un espace d'essai (56), qui est accessible par l'extérieur par une conduite d'essai (60) à des fins d'essai et/ou une étanchéité complémentaire.

16. Etanchéité ou dispositif selon la revendication 15,
**caractérisé en ce qu'**un espace d'essai (56, 56a) est prévu sur chaque côté de joint (2, 3) du dispositif jumelé (55), espaces qui sont raccordés à la même conduite (60).

17. Etanchéité ou dispositif selon la revendication 15 ou 16,
**caractérisé par** des moyens d'engagement (57, 58, 57a, 63) sur le corps de joint (1) et l'une des parties (11) à étancher.

18. Etanchéité ou dispositif selon l'une quelconque des revendications 15 à 17,
**caractérisé en ce que** la conduite d'essai et/ou la conduite d'étanchéité complémentaire (60) est (sont) guidée(s) dans la zone d'une fente (40) radiale entre les parties (11, 14) à étancher, afin de donner accès à partir de là à l'espace d'essai (56, 56a).

19. Etanchéité ou dispositif selon l'une quelconque des revendications 15 à 18,
**caractérisé par** un système de conduite (70), qui permet d'accéder à plusieurs espaces d'essai et/ou d'étanchéité (56, 56a).
